Europäisches Patentamt

European Patent Office

Office européen des brevets

(11) Publication number: **0 127 007**
**B1**

## (12) EUROPEAN PATENT SPECIFICATION

(45) Date of publication of patent specification: **16.08.89**

(21) Application number: **84104923.2**

(22) Date of filing: **03.05.84**

(51) Int. Cl.⁴: **G 06 F 13/40**

(54) Data processing interface apparatus.

(30) Priority: **27.05.83 US 499111**

(43) Date of publication of application:
**05.12.84 Bulletin 84/49**

(45) Publication of the grant of the patent:
**16.08.89 Bulletin 89/33**

(84) Designated Contracting States:
**DE FR GB**

(56) References cited:
**FR-A-2 477 808**
**GB-A-2 021 823**
**US-A-4 236 225**

**IBM TECHNICAL DISCLOSURE BULLETIN, vol.
19, no. 5, October 1976, pages 1892-1895, New
York, US; Y. DISHON et al.: "Variable-length
data assembler"**

(73) Proprietor: **International Business Machines
Corporation
Old Orchard Road
Armonk, N.Y. 10504 (US)**

(72) Inventor: **Dill, Frederick Hayes
R.R. 1 Box 144
South Salem New York 10590 (US)**
Inventor: **Ling, Daniel Tajen
150 Overlook Avenue, Apt. 6R
Peekskill New York 10566 (US)**
Inventor: **Matick, Richard Edward
14 Lakeview Ave. E
Peekskill New York 10566 (US)**
Inventor: **McBride, Dennis Jay
266 Noxon Road
Poughkeepsie New York 12603 (US)**

(74) Representative: **Appleton, John Edward
IBM United Kingdom Limited Intellectual
Property Department Hursley Park
Winchester Hampshire SO21 2JN (GB)**

EP 0 127 007 B1

Courier Press, Leamington Spa, England.

**Description**

Background of the invention
Field of the invention

This invention relates to data processing interface apparatus for interfacing between different or variable width data fields or blocks. The apparatus includes circuitry which translates $N_f$-bit data inputs into $N_c$-bit outputs where both $N_f$ and $N_c$ can be dynamically varied, and particularly relates to apparatus for interfacing data represented by variable-length formats to fixed width data buses.

Description of the prior art

The prior art contains a large number of general references relating to handling data which may vary in length or field width. Some examples are as follows:

U.S. Patent 4,258,419 issued March 24, 1981 to Blahut et al entitled Data Processing Apparatus Providing Variable Operand Width Operation, describes a system including a Central Processing Unit which provides programmable variation of the operand width for processor operations. The operands are formed with one or more N-bit segments. The CPU includes an arithmetic logic unit (ALU) which is adapted to operate serially on one N-bit segment of the operand at a time beginning with the least significant segment and repeating the operation on the remaining segments according to their order of significance.

U.S. Patent 4,219,874 issued August 26, 1980 to Gusev et al entitled Data Processing Device for Variable Length Multibyte Data Field describes a data processing structure for variable length formats which includes a control unit and a storage unit coupled to the control unit. Two data exchange buses are each coupled to a respective data input and to a respective data output of the storage unit. Two switches are coupled to the control unit and to respective data exchange buses. An arithmetic/logic unit is coupled to the control unit, to the switches and to the storage unit. A data shift unit is coupled to the data exchange buses and to the control unit. A data masking unit is coupled to the data exchange buses to the control unit and to the switches. This structure enables the preparation for processing of multibyte data fields arbitrarily arranged with respect to the word boundaries in main storage. The data shift unit provides automatic alignment of the bytes of the operands relative to each other. The data masking unit masks irrelevant bytes of the first and last words of each operand.

U.S. Patent 3,573,744 issued April 6, 1971 to Rigalo entitled Data Buffer System for Transferring Information From a First to a Second Storage Medium describes a system wherein a data buffer and converter receive information from a first storage medium such as a magnetic tape, converts it into a different format, and enters the converted data into a second storage medium, such as the memory of a stored program machine. Each entry on the tape comprises n-lines of m-bits each. The data read from each line of an entry is transferred to a different one of a plurality of m-bit registers. Subsequently, by means of instrumentalities including a shift register, the data from the plurality of m-bit registers is rearranged into a single word having n×m-bits and entered into the second storage medium.

U.S. Patent 4,126,897 entitled Request Forwarding System, issued November 21, 1978 to Capowski et al which describes a system wherein requests are forwarded from plural input/output channels to shared main storage. Variation in word widths are identified by tags such that "EOT" represents a "1-wide" request and a "QW" tag represents a "4-wide" request.

In U.S. Patent 4,057,846 entitled Bus Steering Structure for Low Cost Pipelined Processor Systems, issued November 8, 1977 to Cockerill et al, a system is described including logic circuitry which provides a control function to steer data over the proper bus structures for interconnecting the processor, the memory and the input/output devices. No variable word problems are involved.

Likewise, Misunas et al (U.S. Patent 4,174,536) discloses a system with a message routing switch wherein serial and parallel interfaces are associated with input/output ports. Davis et al (U.S. Patent 4,075,691) and Larson et al (U.S. Patent 4,079,452) show control systems using serial interface adapters and parallel interface adapters. Labeye-Voisin et al (U.S. Patent 4,115,856) and Hostein (U.S. Patent 4,034,346) show interfaces using parallel to serial conversion.

U.S. Patent 4,159,534 (Gelson Jr. et al), 4,070,710 (Sukonich et al), 4,004,283 (Bennett et al), 4,133,030 (Huettner et al), 4,205,373 (Shah et al) and 4,128,883 (Duke et al) show systems using device, channel and interface adapters for coupling to a bus.

In U.S. Patent 3,949,375 (Ciarlo) a pair of 16-bit registers couple on a I/O bus to various display devices. In U.S. Patent 3,500,466 (Carleton), a multiplexer is shown which couples different data sets through bit buffers to a common multi-line bus, and in U.S. Patent 3,665,409 (Miller et al) a signal translator is shown for "skewing" or shifting data.

Other U.S. Patent references in the general field of the present invention include 4,286,321, 4,131,940, 3,863,226, 3,699,525 and 3,638,195.

In addition to the above-listed prior art references, mention is made of our European patent application Publication No. 97834, which describes a structure for accessing a variable width data bus with a variable width data field. The structure used is a modulo $N_c$ combinational ring counter.

FR—A—2 477 808 (Konto-Ghiorghi) discloses an apparatus in which input data words having a variable data field width are interfaced to a fixed width data bus and in which the number of data bits is larger than the data bus width. The data bits are sequentially transferred in a series of groups of bits equal to the data bus width.

The present invention, which includes a preferably VLSI circuit and method of operation thereof for interfacing separate entities of data each having different field widths with a processor data bus of constant width by translating $N_f$-bit data inputs into $N_c$-bit outputs where both $N_f$ and $N_c$ can be dynamically varied is structurally distinct and patentably novel over the aforesaid representative prior art.

Summary of the invention

One object of the present invention is to provide a system wherein input data words of variable data field width can be interfaced to a fixed width data bus.

Another object of the present invention is to provide a system including a VLSI circuit for translating $N_f$-bit inputs into $N_c$-bit outputs, wherein $N_f$ and $N_c$ can be dynamically varied.

Still another object of the present invention is to provide a circuit for interfacing data fields of variable bit lengths onto a constant width data processor bus including a modulo $N_c$ down-shifter structure where $N_c$ is the bit length of the data bus width, said down-shifter being responsive to $N_f$ length data field bits to provide output cycles of $N_c$ bits in length, a mask means for generating a mask when $N_f$ is not a multiple of $N_c$ and invalid data bits occur and logic and control means for said down-shifter and mask generator means.

The foregoing and other objects, features and advantages of this invention will be apparent from the following more particular description of the invention, as illustrated in the accompanying drawings.

Brief description of the drawings

Figure 1 is a schematic illustration of a system having a data logic interface between a data field of variable width and a data bus of selectable width according to the principles of the present invention.

Figures 2.1, 2.2 and 2.3 illustrate operation of a mod $N_c$ down-shifter operation used in the present invention.

Figures 3.1, 3.2, 3.3 and 3.4 illustrate the logic circuit of the mod $N_c$ down-shifter of Figure 2.

Figures 4.1 and 4.2 illustrate peripheral circuits for controlling the general mod $N_c$ down counter for any value of $N_f$ and $N_c$.

Description of the preferred embodiment

In many computer applications, a time varying stream of data is fed into a system which has a fixed or selectable input data width. Each piece of data having a given field width at a given instant of time is a single entity and must be treated as such by the processor. Each subsequent piece of data is likewise a single entity but can have a different field width.

An interface for such application is described herein which is simple, fast, requires relatively modest amounts of circuits, and thereby does not require length processing by the processor itself.

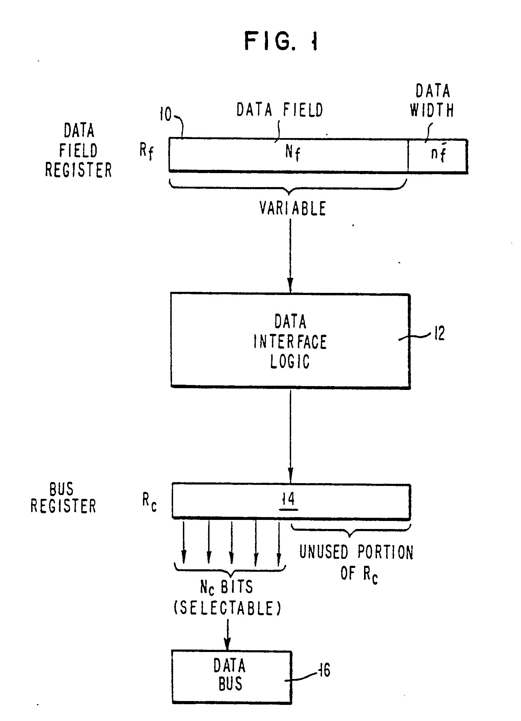

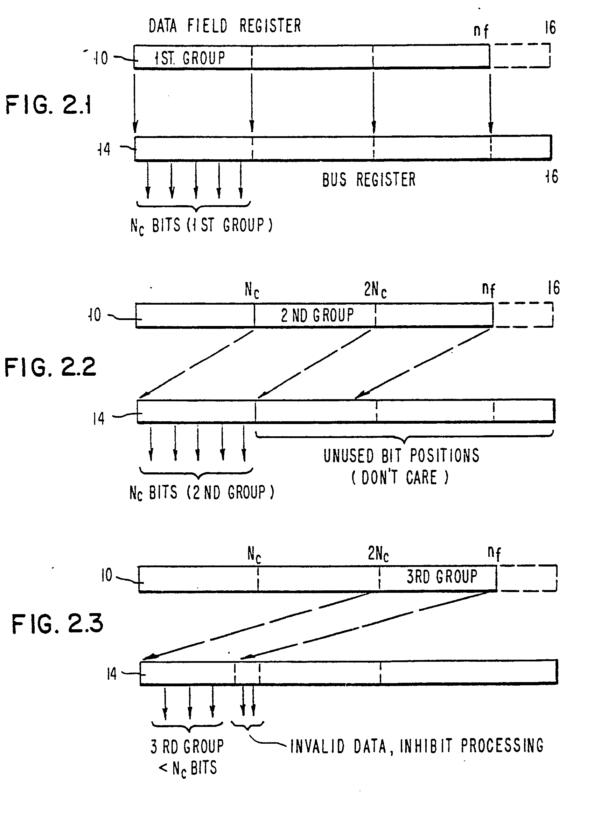

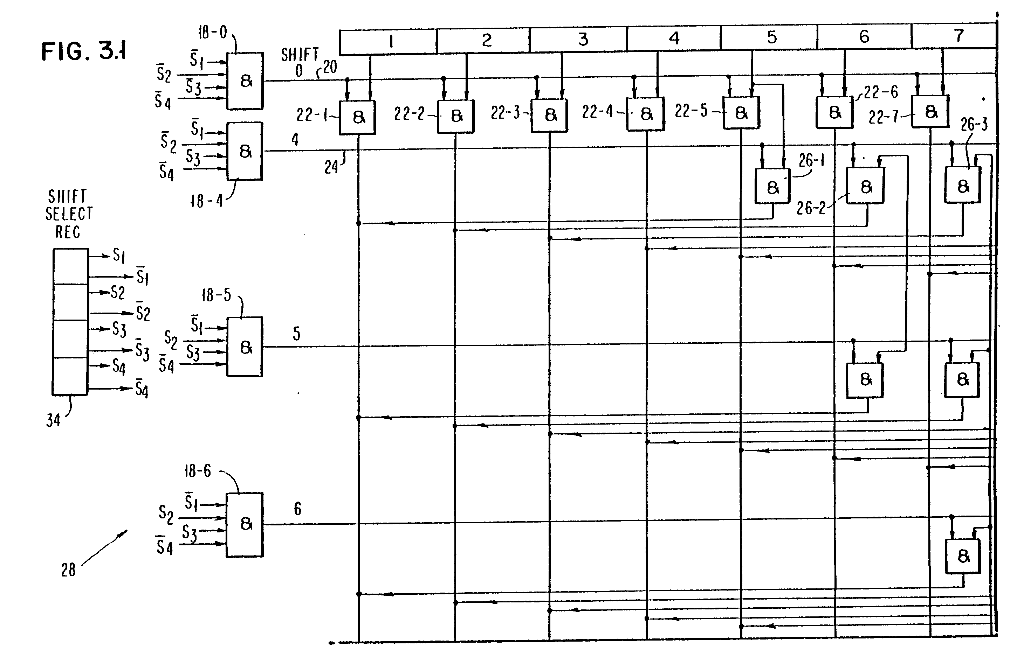

More particularly, in many applications which involve manipulation of data, it is necessary to interface a data field $N_f$ having a varying field width, to a data bus of constant but selectable width $N_c$. The data bus can be the path into a number of sinks, for instance, a memory or processor. The width of the data field can be greater than, equal to, or less than the data bus width and can vary from cycle to cycle. The data bus width will be constant for any given system but can be changed with an initialization parameter. The data field width must be left or right-justified to the data bus and multiple cycles with control and alignment must be provided for cases where $N_f > N_c$. The actual width of the variable data field $N_f$ will be specified by a separate set of bits $n_f$ supplied with the data in data field register 10 as shown in Figure 1. The data is entered into a data interface logic circuit 12 which in turn is connected to bus register 14 of data bus 16. For purposes of discussion, it will be assumed that the width of the data field $N_f$ is

$$4 \leq N_f \leq 16$$

but varies from cycle to cycle as specified by the value of $n_f$ and furthermore the width of the data bus is

$$4 \leq N_c \leq 16$$

where $N_c$ is selectable but fixed for any long period of operation. One simple way to achieve, the data logic circuit 12 employs a modulo $N_c$ down-shifter shown schematically in Figures 2.1, 2.2 and 2.3. The data field register 10 and bus input register 14 will both be 16 bits wide. The data field register 10 will be loaded with anywhere from 4 to 16 bits; assume $N_f = 13$ bits for this example. The bus register 14, even though 16 bits wide, has been initialized so that only $N_c$ high order bits are connected to the bus. For this illustration let $N_c = 5$. On the first cycle, as shown in Figure 2.1, all 16 bits of data register 10 are loaded into bus register 14. However, as just described, only the first group of $N_c$ bits appear on the bus and are utilized. Thus the first $N_c$ bits of $N_f$ (i.e., 5 out of 13) are properly processed. On the second cycle (Figure 2.2), the bits of data field register 10 are shifted down by a distance $N_c$ and latched into bus register 14. Now, this second group of $N_c$ bits (i.e., second group of 5 bits) is processed. At this point processing of 10 of the 13 bits has been completed. On the third cycle, the bits of data field register 10 are shifted down by 2 $N_c$ positions and latched into bus register 14 as shown in Figure 2.3. The previously described procedure can be followed except for one important detail+only 3 of the 5 bits which appear on the bus are valid data bits. Unless some action is taken, the two invalid data bits in Figure 2.3 will be processed. This is often undesirable. For instance, if the bus serves a memory, these 2 bits will over-write whatever was previously in the memory.

In order to prevent this, a mask is generated corresponding to the bus register 14 with 1's marking the valid bit positions. The number of valid bits is determined in a very simple manner for each cycle, and easily converted into a mask. For the example under consideration, the number would be 3 and would be converted into a string of three 1's and the remainder 0's. These mask signals can be used as "select signals" to enable memory chips if the bus feeds a memory, or as a direct mask for a processor. Naturally if the mask is not necessary it need not be generated. The generation of this mask as well as the determination of the number of shifts, boundaries and other controls is actually quite simple and will be later described. However, a further explanation of the modulo $N_c$ down-shifter of data logic interface 12 will be provided to show one logical implementation and to estimate the circuit count.

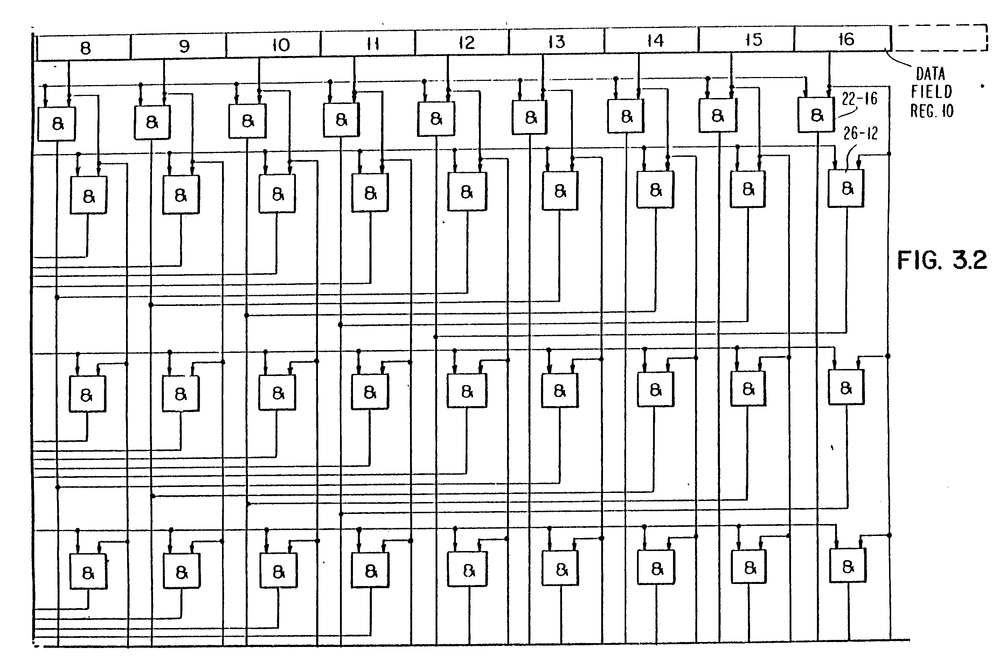

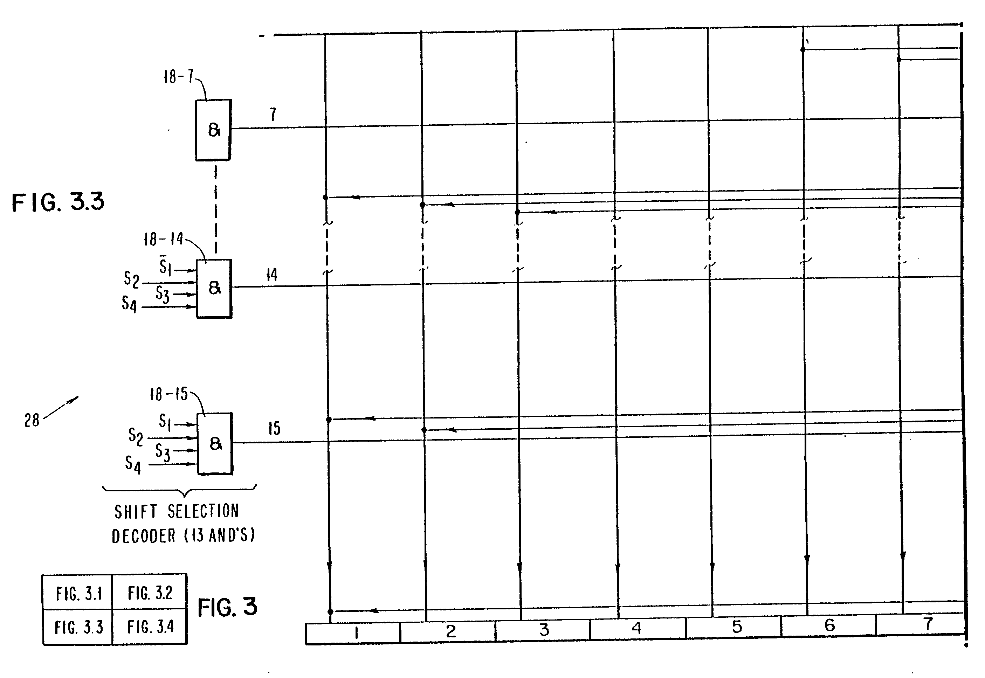

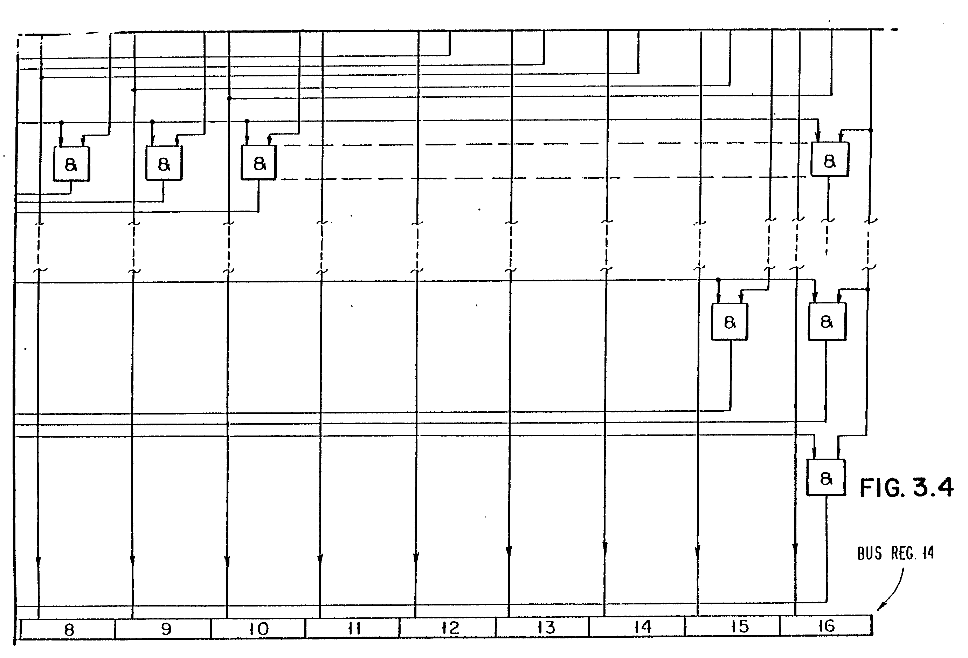

One simple combinatorial circuit to achieve the modulo $N_c$ down-shifter of data logic interface 12 is illustrated in Figures 3.1, 3.2, 3.3 and 3.4 for a data field and bus width both of 16 bits maximum and 4 bits minimum. The shifter 28 is connected between data field register 10 and bus register 14 in Figure 3.1, and responsive to the outputs of shift select register 34 which feeds combinations of shift pulses $S_1$, $S_2$, $S_3$, $S_4$, $\overline{S}_1$, $\overline{S}_2$, $\overline{S}_3$ and $\overline{S}_4$ into thirteen shift selection decoder AND gates 18-0 and 18-4 through 18-15. The AND gates 18-0, 18-4 through 18-15 allow any one of 13 possibe shifts namely 0, and 4 through 15. The selection of the proper shift position at the proper time is controlled by other circuits on the periphery of the shifter and these are described later.

It can be seen from Figure 3.1 that the "shift 0" output of gate 18-0 on line 20 requires one AND for each bit, or 16 (or 32) gates for a 16 (or 32) bit shifter. These gates are designated 22-1 through 22-16 in Figures 3.1 and 3.2. Since the minimum value of $N_c$ is 4, the minimum number of shifts (other than 0) is 4 as shown as the output of gate 18-4 on line 24. This operation requires 12 (28) AND gates for a 16 (32) bit shifter. These gates are designated 26-1 through 26-12 in Figure 3.1 and 3.2. The shifter does not need a wrap-around on the left-hand edge of bus register 14 since the "lost" bits were processed on the previous cycle. This greatly simplifies the down-shifter. Each succeeding shift position (outputs of gates 18-5, 18-6, 18-7 etc.) requires one fewer AND gate up to the last position (output of gate 18-15) which requires one AND. These AND requirements are summarized in Table 1 herebelow for a 16 and 32 bit shifter. For the 16 bit case, the AND gate network which does the actual shifting totals only 94 circuits exclusive of any additional circuits that might be needed for fan-out, or any OR gates that may be needed for fan-in. In addition to these 94 AND's the shift selection decoder on the left-hand side of Figure 3 requires 13 AND's for a total of 94+13=107 AND gates. A similar 32 bit down-shifter will require 438+29=467 AND gates or over 4 times as many, but still not very excessive.

TABLE I
"AND" gates required for modulo $N_c$ down-shifter

| 16 bit data width | | 32 bit data width | |
|---|---|---|---|
| Shift position | #AND gates on that position | Shift position | #AND gates on that position |
| 0 | 16 | 0 | 32 |
| 4 | 12 | 4 | 28 |
| 5 | 11 | 5 | 27 |
| 6 | 10 | 6 | 26 |
| 7 | 9 | 7 | 25 |
| 8 | 8 | 8 | 24 |
| 9 | 7 | etc. | etc. |
| 10 | 6 | 28 | 4 |
| 11 | 5 | 29 | 3 |
| 12 | 4 | 30 | 2 |
| 13 | 3 | 31 | 1 |
| 14 | 2 | | |
| 15 | 1 | | |
| | 94 | | 438 |
| #AND's in Shift decoder | 13 | #AND's in Shift decoder | 29 |
| Total AND's | 107 | Total AND's | 467 |

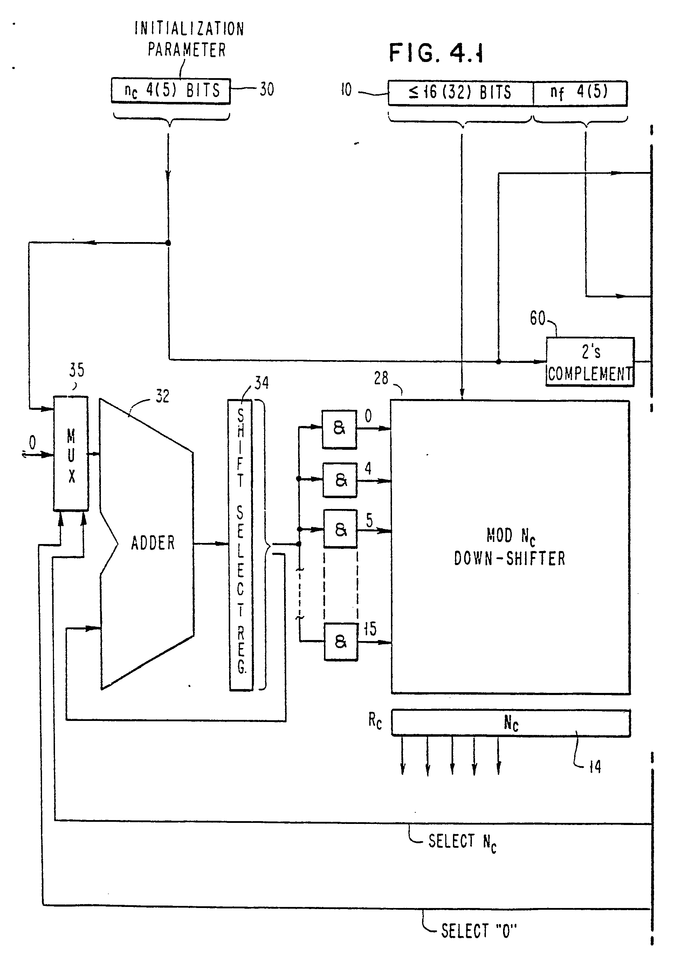

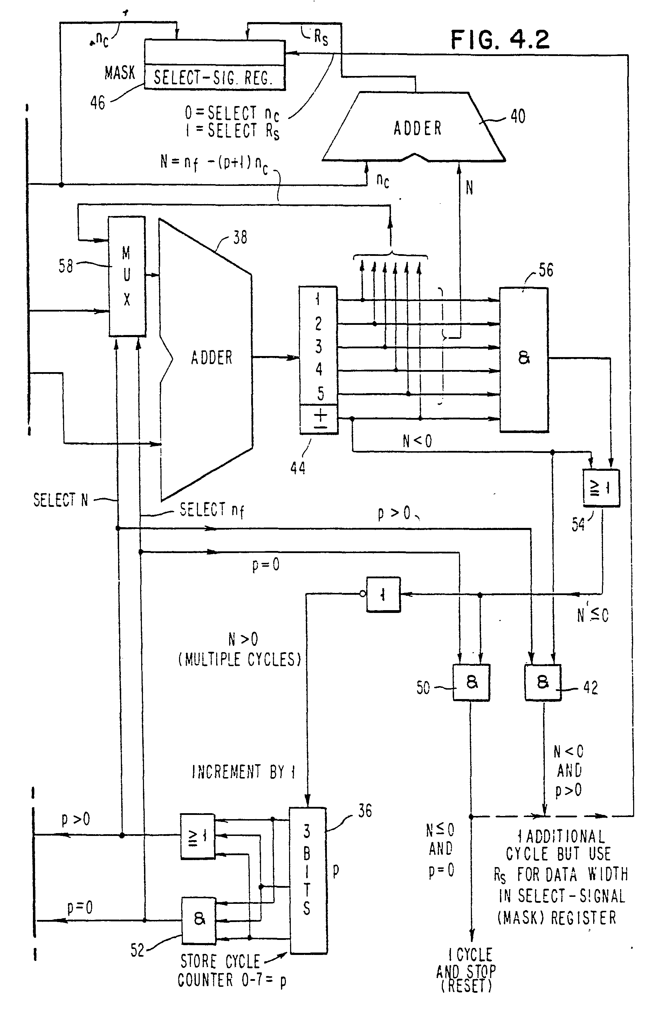

The modulo $N_c$ down-shifter within data interface logic 12 of Figure 1 requires a number of peripheral control circuits to select the proper shift distance at the correct time. This can be done as shown in the schematic circuit illustrated in Figures 4.1 and 4.2.

The width $N_c$ of the data bus 16 is a system initialization parameter permanently stored in binary form as $n_c$ either in a register 30 or on fixed signal lines. The value of $n_c$ is used in conjunction with adder 32 and shift-select register 34 to select the shift distance of the mod $N_c$ down-shifter 28 on each successive cycle. On the first cycle, a 0 value is entered by way of the multiplexer 35 on adder 32. The first cycle is always "shift 0" and is controlled by the cycle counter 36. The counter 36 is initially set to zero at the beginning of each new data field $N_f$. On subsequent cycles, the cycle counter will be greater than 1 and hence a decimal value of $N_c$ will be added to the old "shift amount" on each succeeding cycle. This selects the 1st, 2nd, 3rd etc., group of $N_c$ bits from $N_f$ to be processed.

When the last group of bits to be processed is less than $N_c$, the correct value for the mask or select function is determined by adder 38 and the N register 44 in conjunction with adder 40 as follows. The value of $n_c$ is 2's complemented to make it negative, and then added to the value of $n_f$ in adder 38 to give the value

$$N = n_f - (p+1)n_c$$

where p is 0 through 7, the number of partial character store cycles completed as expressed in the cycle counter. If N becomes less than zero while p is greater than zero, as detected by AND 42, this indicates that $N_f$ was originally greater than $N_c$, requiring multiple cycles for this data field. Furthermore, on this last cycle, the remaining bits to be processed are less than $N_c$. The correct number of bits remaining to be processed is determined by adding $n_c$ to the negative number in the N register 44 using adder 40 as shown. The resulting value, $R_s$, is placed in the mask select register 46 for this last cycle. The mask select register 46 is used as the input to a select signal generator, which consists simply of two decoders the outputs of which are ANDed together to produce a mask wherein a string of 1 bits designate the mask positions, with the remaining being 0's, as previously described. This select signal generator need not necessarily be part of the system described: rather the "value" stored in the mask select register can be used in any number of standard ways to insure proper processing of the valid bits currently in bus register 14.

When N is less than or equal to 0, and p is 0, then $N_f$ is less than $N_c$ on the first cycle. Only one cycle is needed for this character, using $R_s$ as generated above for the mask select width. This condition of one cycle will be signaled by AND 50 as a result of a signal "p=0" from cycle counter 36 through AND gate 52 as well as a "N≤0" signal from OR gate 54 connected to AND gate 56 and register 44.

The cycle counter 36 is also used to initially select $n_f$ into adder 38 on the first partial cycle of a new $N_f$ operation, and to select N (the remainder of bits to be stored) on subsequent cycles. The counter 36 is increased by one for each partial cycle. This counter as well as other necessary registers will be set to zero each time a new data field $N_f$ is initiated. These functions then are automatically updated by the correct values until the full data width is processed. The master clock and additional controls for achieving this are not shown.

The bit cycle counter 36 need only be a single bit latch which is reset at the beginning of each new data field. An actual count of the cycles may be useful for other controls but this remains to be determined.

What has been described is a system for a data processing environment wherein input data words of variable data field width can be interfaced to a fixed width data bus. More particularly, the system employs a circuit for translating a first length ($N_f$) the bit input into a second length ($N_c$) bit output such as to interface the input bits with an $N_c$ length data bus. The circuit has been particularly described as including a modulo $N_c$ down shifter structure.

## Claims

1. Data processing interface apparatus for interfacing between different or variable width data fields or blocks, comprising a data field register (10) for storing a variable width data field having a number of data bits $N_f$,

a data bus register (14) for storing selected groups of $N_c$ data bits from said data field register,

a data bus (16) having a width of $N_c$ bits, and

a datalogic means (12) including a modulo $N_c$ down-shifter circuit (28) and mask generator means for providing mask bits for bit positions in the last series of said transferred $N_f$ bits when said last series of bits is less than $N_c$ resulting from $N_f$ not being a multiple of $N_c$ connected between said data field register and said data bus register, said data logic means functioning for sequentially transferring groups of $N_c$ data bits of said $N_f$ data bits from said data field register into first $N_c$ bit positions of said data bus register for connection to said $N_c$ width data bus until all of said $N_f$ data bits have been transferred into said data bus in groups of $N_c$.

2. Apparatus according to Claim 1 wherein said number of data bits $N_f$ in said data field register is larger than said data bus width of $N_c$ bits,

and wherein said data logic means sequentially transfers said $N_f$ bits from said data field register to said data bus register in a series of groups of $N_c$ bits.

3. Apparatus according to Claim 2 wherein said data logic means includes means (30) for storing the value of $N_c$ as a binary number $n_c$, a cycle counter (36), a multiplexer-adder (32) and a shift-select register (34), wherein said binary number $n_c$ and said output of said cycle counter are applied through said multiplexer-adder to said shift select register to select the shift distance of said module $N_c$ down-shifter circuit for successive cycles of said cycle counter.

4. Apparatus according to Claim 3 wherein said data logic means further includes means connected to said data field register for storing the value of $N_f$ as a binary number $n_f$, means (60) connected to said $N_c$ storage means for the converting of the binary number $n_c$ to a negative value, means (38, 44) for combining the binary number $n_f$ and the negative binary number $n_f$ and the negative binary number $n_c$ with the output of said cycle counter to provide a value N;

register means (44) for storing the value N;

means (54) for determining when said N value is negative;

adding means (40) for adding the binary number $n_c$ to said N value in said N register means to provide a resulting value $R_s$; and

a mask select register (46) for storing said resulting value $R_s$.

## Patentansprüche

1. Datenverarbeitungsinterface-Vorrichtung zum Angleichen zwischen Datenfeldern oder Blöcken unterschiedlicher oder variabler Größe, mit einem Datenfeldregister (10) zum Speichern eines Datenfeldes variabler Größe mit einer Anzahl von Datenbits $N_f$,

mit einem Datenbusregister (14) zum Speichern ausgewählter Grup-pen von $N_c$ Datenbits von dem Datenfeldregister,

mit einem Datenbus (16), der eine Größe von $N_c$ aufweist, und

mit einem Datenlogikglied (12), das ein Modul $N_c$ Down-Shifter Schaltkreis (28) enthält, und ein Maskenherstellungsglied, das zwischen dem Datenfeldregister und dem Datenbusregister ange-schlossen ist, zum Bereitstellen von Maskenbits für Bitpositionen in der letzten Datenfolge der übertragenen $N_f$ Bits, wenn die letzt Bitfolge kleiner ist als $N_c$, was daraus resultiert, daß $N_f$ ein Vielfaches von $N_c$ ist, wobei das Datenlogikglied zur sequen-tiellen Übertragung von Gruppen von $N_c$ Datenbits der $N_f$ Datenbits von dem Datenfeldregister in erste $N_c$ Bitpositionen des Datenbus-registers zur Verbindung mit dem Datenbus der Größe $N_c$ ausgebil-det ist, bis alle $N_f$ Datenbits in den Datenbus in Gruppen von $N_c$ übertragen wurden.

2. Vorrichtung nach Anspruch 1, bei der die Anzahl der Datenbits $N_f$ in dem Datenfeldregister größer iste als die Datenbusgröße von $N_c$ Bits, und bei der das Datenlogikglied die $N_f$ Bits sequentiell von dem Datenfeldregister zu dem Datenbusregister in einer Folge von Gruppen zu $N_c$ Bits überträgt.

3. Vorrichtung nach Anspruch 2, bei der das Datenlogikglied Mittel (30) zum Speichern des Wertes von $N_c$ als eine Binärzahl $n_c$, einen Zykluszähler (36), ein Multiplex-Addierglied (32) und ein Shift-auswahl-Register (34) beinhaltet, wobei die Binärzahl $n_c$ und der Ausgang des Zyklus-Zählers über das Multiplex-Addierglied an das Shiftauswahl-Register gelegt sind, um den Shift-Abstand des Modul $N_c$ Down-Shifter Schaltkreises für aufeinanderfolgende Zyklen des Zyklus-Zählers auszuwählen.

4. Vorrichtung nach Anspruch 3, bei der das Datenlogikglied außerdem beinhaltet:
Mittel, die an das Datenfeldregister angeschlossen sind, um den Wert von $N_f$ als eine Binärzahl $n_f$ zu speichern, Mittel (60), die an die $N_c$ Speichermittel (38, 44) angeschlossen sind, zur Konvertierung der Binärzahl $n_c$ in einen negativen Wert, Mittel um die Binärzahl $n_f$ und die negative Binärzahl $n_f$ und die negative Bi-närzahl $n_c$ mit dem Ausgang des Zyklus-Zählers zu kombinieren, um einen Wert N zu speichern;
Registermittel (44), um den Wert N zu speichern;
Mittel (54), um zu bestimmen, wann der N Wert negativ ist;
ein Addierglied (40), um die Binärzahl $n_c$ zu dem N Wert in den N Registermitteln zu addieren, um einen resultierenden Wert $R_s$ zu bilden; und
ein Maskenauswahlregister (46), um den resultierenden Wert $R_s$ zu speichern.

**Revendications**

1. Dispositif d'interface de traitement de données pour réaliser une interface entre des blocs ou des zones de données de largeurs différentes ou variables, comprenant un register de zones de données (10) pour mémoriser une zone de données de largeur variable ayant un nombre ($N_f$) de bits de données, un register de bus de données (14) pour mémoriser des groupes sélectionnés de $N_c$ bits de données issus du registre de zones de données, un bus de données (16) ayant une largeur de $N_c$ bits, et un moyen logique de données (12) comprenant un circuit à décalage abaisseur (28) modulo $N_c$ et un moyen générateur de masque pour fournir des bits de masque pour des positions de bits dans la dernière série des $N_f$ bits transférés lorsque cette dernière série de bits est inférieure à $N_c$ résultant du fait que $N_f$ n'est pas un multiple de $N_c$, connecté entre le register de zones de données et le register de bus de données, ce moyen logique de données fonctionnant pour transférer de façon séquentielle des groupes de $N_c$ bits de données des $N_f$ bits de données du registre de zones de données dans les $N_c$ premières positions de bits du registre de bus de données pour une connexion au bus de données de largeur $N_c$ jusqu'à ce que la totalité des $N_f$ bits de données ait été transfére dans ce bus de données en groupes de $N_c$ bits.

2. Dispositif selon la revendication 1, dans lequel le nombre $N_f$ de bits de données dans le registre de zones de données est supérieure à la largeur du bus de données de $N_c$ bits, et dans lequel le moyen logique de données transfère de façon séquentielle les $N_f$ bits du registre de zones de données au registre de bus de données en une série de groupes de $N_c$ bits.

3. Dispositif selon la revendication 2, dans lequel le moyen logique de données comporte un moyen (30) pour mémoriser la valeur de $N_c$ sous forme d'une nombre binaire $n_c$, un compteur de cycles (36), un additionneur-multiplexeur (32) et un registre de sélection de décalage (34), dans lequel le nombre binaire $n_c$ et la sortie du compteur de cycles sont appliqués par l'intermédiaire de l'additionneur-multiplexeur au registre de sélection de décalage pour choisir la distance de décalage du circuit à décalage abaisseur modulo $N_c$ pendant des cycles successifs du compteur de cycles.

4. Dispositif selon la revendication 3, dans lequel le moyen logique de données comporte en outre un moyen connecté au register de zones de données pour mémoriser la valeur de $N_f$ sous forme d'un nombre binaire $n_f$, un moyen (60) connecté auxdits moyens de mémoire de $N_c$ (38, 34) pour convertir le nombre binaire $n_c$ en une valeur négative, un moyen pour combiner le nombre binaire $n_f$ et le nombre binaire négatif $n_c$ avec la sortie du compteur de cycles pour fournir une valeur N;
un moyen de registre (44) pour mémoriser la valeur N;
un moyen (54) pour déterminer si la valeur N est négative;
un moyen additionneur (40) pour additionner le nombre binaire $n_c$ à la valeur N dans le moyen de registre de N pour fournir une valeur résultante $R_s$; et
un registre de sélection de masque (46) pour mémoriser la valeur résultante $R_s$.

# FIG. 1

DATA FIELD REGISTER                                    nf        16

10 — | 1ST GROUP |

FIG. 2.1

14 — 
                    BUS REGISTER                                  16

Nc BITS (1ST GROUP)

---

                        Nc              2Nc           nf        16

10 — |           | 2ND GROUP |

FIG. 2.2

14 — 
                                    UNUSED BIT POSITIONS
                                    ( DON'T CARE )

Nc BITS (2ND GROUP)

---

                        Nc              2Nc           nf

10 — |           |           | 3RD GROUP |

FIG. 2.3

14 — 

3 RD GROUP          INVALID DATA, INHIBIT PROCESSING
< Nc BITS

2

# FIG. 3.1

EP 0 127 007 B1

FIG. 3.2

DATA FIELD REG. 10

22-16
26-12

FIG. 3.3

18-7

18-14

18-15

$\bar{S}_1$
$S_2$
$S_3$
$S_4$

$S_1$
$S_2$
$S_3$
$S_4$

28

SHIFT SELECTION
DECODER (13 AND'S)

| FIG. 3.1 | FIG. 3.2 |
|----------|----------|
| FIG. 3.3 | FIG. 3.4 |

FIG. 3

EP 0 127 007 B1

FIG. 3.4

BUS REG. 14

EP 0 127 007 B1

FIG. 4.1

FIG. 4.2